# EUROPÄISCHE PATENTSCHRIFT

(11) **EP 2 514 161 B1**
(45) Veröffentlichungstag und Bekanntmachung des Hinweises auf die Patenterteilung: **20.04.2016**
(21) Anmeldenummer: 10795654.2
(22) Anmeldetag: 10.12.2010
(51) Int. Cl.: H04L 29/06, H04L 29/08

(54) **VERFAHREN ZUR KOMMUNIKATION ZWISCHEN EINEM ERSTEN KRAFTFAHRZEUG UND MINDESTENS EINEM ZWEITEN KRAFTFAHRZEUG**
METHOD FOR COMMUNICATING BETWEEN A FIRST MOTOR VEHICLE AND AT LEAST ONE SECOND MOTOR VEHICLE
PROCÉDÉ POUR LA COMMUNICATION ENTRE UN PREMIER VÉHICULE ET AU MOINS UN SECOND VÉHICULE

(30) Priorität: 14.12.2009 DE 102009058073
(43) Veröffentlichungstag der Anmeldung: 24.10.2012
(73) Patentinhaber: Continental Automotive GmbH, 30165 Hannover (DE)
(72) Erfinder: MENZEL, Marc, 35043 Marburg (DE); STÄHLIN, Ulrich, 65760 Eschborn (DE)
(86) Internationale Anmeldenummer: PCT/EP2010/069414
(87) Internationale Veröffentlichungsnummer: WO 2011/082948

(56) Entgegenhaltungen:
- DE-A1-102008 061 303
- US-A1- 2003 073 406
- US-A1- 2009 207 004
- TOOR Y ET AL: "Vehicle Ad Hoc networks: applications and related technical issues", IEEE COMMUNICATIONS SURVEYS, IEEE, NEW YORK, NY, US, Bd. 10, Nr. 3, 1. Juli 2008 (2008-07-01), Seiten 74-88, XP011234563, ISSN: 1553-877X, DOI: DOI:10.1109/COMST.2008.4625806
- MAXIM RAYA ET AL: "SECURING VEHICULAR COMMUNICATIONS", IEEE WIRELESS COMMUNICATIONS, IEEE SERVICE CENTER, PISCATAWAY, NJ, US, Bd. 13, Nr. 5, 1. Oktober 2006 (2006-10-01), Seiten 8-15, XP011143978, ISSN: 1536-1284

## Beschreibung

Die vorliegende Erfindung betrifft ein Verfahren zur Kommunikation zwischen einem ersten Kraftfahrzeug und mindestens einem zweiten Kraftfahrzeug, die in einem mobilen, zumindest zwei Kraftfahrzeuge umfassenden Kommunikationsverbund ausgeführt sind.

Die US 2009/0207004 A1 betrifft ein Verfahren zum Schutz eines beweglichen Gutes, insbesondere eines Kraftfahrzeugs gegen unbefugte Benutzung. Dieses Verfahren durchläuft die Schritte: Kryptographische Identitätsprüfung und/oder kryptographische Authentifizierung des Fahrzeuges mit einem externen Computersystem, Überprüfung, ob eine Blockade des Fahrzeuges vorliegt, Übertragung eines Signals von dem Computersystem an das Fahrzeug, um den Einsatz des Kraftfahrzeugs zu ermöglichen, wenn keine Blockade für das Kraftfahrzeug vorliegt und abgespeichert ist

Die US 2003/0073406 A1 offenbart ein Systeme und Verfahren zum Einrichten eines mobilen Netzwerks, in dem jede mobile Einheit, wie beispielsweise ein Auto, Lastwagen oder einem anderen Fahrzeug mit den mehreren Sensoren, Prozessoren und Empfänger / Sender ausgestattet ist, ein Knoten bildet und in der Lage zum Empfangen und Senden einer offenbarten Vielzahl von Informationen ist, einschließlich Informationen über die Verkehrssituation, des fahrzeugmechanische und/oder fahrzeugelektrische Status, Streaming Audio und Video, E-Mail und Voicemail. Diese Anmeldung verwendet mehreren Sensor-Fusion-Technologie, um einen optimierten Wert einer überwachten Größe, zum Beispiel die Echtzeitfähigkeit jeder mobilen Einheit zu bestimmen, die dann gegebenenfalls an Dritte über das Netzwerk kommuniziert wird.

Das Einsatzgebiet der Erfindung bezieht sich auf eine so genannte Fahrzeug-zu-Fahrzeug-Kommunikation, welcher auch als "Car-to-Car-Communication" bezeichnet wird, und gänzlich ohne ortsfeste Kommunikationsknoten auskommt. Derartige Kommunikationsverbunde kommen heute vornehmlich bei Nutzfahrzeugen zum Einsatz, welche sich in Kolonnenformation befinden, um Güter von einem Ausgangsort zu einem gemeinsamen Zielort zu transportieren. Die diese Transportaufgabe begleitende Kommunikation gestattet eine einfache Koordination der einzelnen Fahrzeuge während der Fahrt. So können zwischen den Fahrzeugen während der Fahrt Verkehrsstörungen, geplante Fahrtunterbrechungen und dergleichen kommuniziert werden.

Moderne Fahrzeuge sind häufig mit schlüssellosen Zugangssystemen bzw. Funkschlüsseln, dem sog. Remote Keyless Entry (RKE) ausgestattet. Diese Funkschlüssel steuern das Ver- und Entriegeln von Türen und Kofferraum eines Kraftfahrzeuges per Funksteuerung. Auf diese Weise können die Fahrzeugtürschlösser eines Kraftfahrzeuges drahtlos geöffnet bzw. geschlossen werden. Weitere Funktionen können über einen Funkschlüssel aktiviert bzw. deaktiviert werden, wie beispielsweise die Wegfahrsperre.

Ein Funkschlüsselsystem umfasst einen fahrzeugseitigen Empfänger bzw. ein Fahrzeugmodul und einen oder mehrere mobile Sender, die beispielsweise in der Hand gehalten werden können. Der Sender bzw. das tragbare Modul kann dabei mit einem oder mehreren manuell bedienbaren Schaltern versehen sein. Weiterhin gibt es Funkschlüssel neuerer Generationen, bei denen der Funkschlüssel nicht mehr in die Hand genommen wird, sondern der fahrzeugseitige Sender die Nähe des Schlüssels zum Fahrzeug registriert und beispielsweise durch eine Berührung des Türgriffes durch den Fahrer das Türschloss entriegelt. Der Verzicht von manuellen Eingaben über den Funkschlüsselsender wird möglich durch den Einsatz der sogenannten bidirektionalen Kommunikation. Anders als bei einer herkömmlichen Funkschlüssel-Zentralverriegelung werden vom dem Funkschlüsselsender nicht nur Signale an das Schließsystem gesendet, sondern auch Informationen von dem Schließsystem empfangen. Dabei ist der Funkschlüsselsender als Trans-ceiver ausgeführt. Mit dem sogenannten Passive Start and Entry (PA-SE) entriegeln die Türen allein durch Berührung des Türgriffs und der Motor kann auf Knopfdruck ohne Schlüssel gestartet werden. Dabei besitzt der fahrzeugseitige Trans-ceiver einen Speicher, der einen Identifikationscode speichert, der den Funkschlüsselsender identifizieren kann.

Der Austausch von Informationen mit verschiedenen Fahrzeugen, die am Verkehr teilnehmen, und zwischen Fahrzeug und Infrastruktur kann in Zukunft zur Erhöhung der Sicherheit der Verkehrsteilnehmer sowie des Komforts der Fahrzeugführer beitragen. Diese Kommunikation von Fahrzeug zu Fahrzeug bzw. von Fahrzeug zur Infrastruktur, die im Folgenden Fahrzeug-zu-X Kommunikation (C2X Kommunikation) genannt wird, kann nur genutzt werden, wenn eine gewisser Anteil der beteiligten Fahrzeuge oder Infrastruktureinheiten mit entsprechenden Kommunikationseinheiten ausgerüstet ist, die auf derselben Technologie beruhen. Vor allem bei der sich schnell wandelnden Kommunikationstechnologie und abhängig von den Preisvorstellungen der Fahrzeugführer kann der für die Aufrüstung der Fahrzeuge verbundene zusätzliche Aufwand für die Bereitstellung und Installation solch einer Kommunikationseinheit zu hoch sein. Daher werden einfache und kostengünstige Lösungsmöglichkeiten gebraucht, die vielen Fahrzeughaltern die Fahrzeug-zu-X-Kommunikation zur Verfügung stellen können.

Aus der JP 2005174237 A geht ein bekanntes System zur Kommunikation zwischen Fahrzeugen eines solchen Kommunikationsverbundes hervor, welches auf dem Broadcast-Prinzip aufbaut. Hierbei kann der Fahrer eines Fahrzeuges per Sprechfunk Informationen absetzen, welche von übrigen Fahrzeugen empfangbar sind. Hierfür muss zwischen den Fahrzeugen zuvor eine Funkkommunikationsfrequenz festgelegt werden, auf welche die Sprachverständigung erfolgen soll. Alternativ hierzu ist es auch denkbar, die Informationen auf einem allgemeinen Sprachkanal auszutauschen, wobei die Zugehörigkeit zu einem bestimmten Kommunikationsverbund durch eine die Sprachkommunikation einleitende Kennungsinformation gesendet wird. Die bei diesem Stand der Technik vorgestellt Lösung widmet sich vornehmlich Maßnahmen zur Behebung von Kommunikationsstörungen während der Fahrzeug-zu-Fahrzeug Kommunikation.

Aus der DE 10 2005 013 648 A1 geht ein weiteres System zur Kommunikation zwischen Fahrzeugen eines Kommunikationsverbundes hervor. Ein erstes Kraftfahrzeug oder ein immobiler Netzknoten sendet hierbei so genannten Beacons aus, die zumindest eine Angabe der Position des ersten Kraftfahrzeuges oder des immobilen Netzknotens umfassen, wobei ein zeitlicher Abstand zwischen zwei von dem ersten Kraftfahrzeug gesendeten Beacons abhängig von der Geschwindigkeit des ersten Kraftfahrzeuges, der Anzahl der zum Kommunikationsverbund gehörenden Kraftfahrzeuge im Empfangsbereich des ersten Kraftfahrzeuges oder des immobilen Netzknotens, der Position des ersten Kraftfahrzeuges, der Zeit und/oder dem Zustand des ersten Kraftfahrzeuges oder des immobilen Netzknotens eingestellt wird. Dabei erfolgt die Kommunikation zwischen einzelnen Kraftfahrzeugen im Kommunikationsverbund gänzlich ohne die Notwendigkeit ortsfester Kommunikationsknoten.

Zudem ist vorgesehen, dass die Kommunikation zwischen den Kraftfahrzeugen, welche nicht im gegenseitigen Empfangsbereich liegen, mittels eines geeigneten Routing-Verfahrens über weitere Kraftfahrzeuge des Kommunikationsverbundes erfolgt. Vorzugsweise wird dies über WLAN öder unter Verwendung von bekannten Internetprotokollen durchgeführt. Zur Initiierung der internen Kommunikation ist ein der Kommunikationstechnologie entsprechender Verbindungsaufbau notwendig.

Es ist die Aufgabe der vorliegenden Erfindung, ein Verfahren zur Kommunikation zwischen einem ersten Kraftfahrzeug und mindestens einem zweiten Kraftfahrzeug innerhalb eines Kommunikationsverbundes dahingehend zu verbessern, dass mit einfachen technischen Mitteln ein zuverlässiger Verbindungsaufbau eines Kraftfahrzeuges zum Kommunikationsverbund ermöglicht wird, welcher eine sichere geschlossene Kommunikation innerhalb des Kommunikationsverbundes gestattet.

Die Aufgabe wird ausgehend von einem Verfahren gemäß dem Oberbegriff von Anspruch 1 in Verbindung mit dessen kennzeichnenden Merkmalen gelöst. Die jeweils rückbezogenen abhängigen Ansprüche geben vorteilhafte Weiterbildungen der Erfindung an.

Es versteht sich, dass die im Weiteren beschriebene Kommunikation über RKE als nicht einschränkend auszulegen, sondern als eine mögliche Kommunikationsart zu betrachten ist.

In einer ersten vorteilhaften Ausgestaltung des Verfahrens zur Kommunikation zwischen einem ersten Kraftfahrzeug und mindestens einem zweiten Kraftfahrzeug, die einem mobilen, zumindest zwei Kraftfahrzeuge umfassenden Kommunikationsverbund angehören, wobei zur Initiierung der internen Kommunikation der sich in Kolonnenformation befindlichen Fahrzeuge in einem ersten Schritt durch die je zugeordneten Fahrer über eine Funkkommunikationseinheit zwischen den Fahrzeugen via Funkverbindung nur eine Kennungsinformation zur Bildung des Kommunikationsverbundes ausgetauscht wird, welche in einem zweiten Schritt in eine Verbundkommunikationseinheit jedes Fahrzeuges eingegeben wird, um nach Quittierung durch eine Verbundkommunikationseinheit mindestens eines der anderen dem Kommunikationsverbund angehörigen Fahrzeuges in denselben einzutreten. Hierzu ist die Kennungsinformation eine Authentifikation. Die Authentifikation für das jeweilige Fahrerzeug erfolgt durch ein nach dem Zufallsprinzip generiertes Password. Hierzu ist es angedacht, einen Zufallszahlengenerator einzusetzen. Hierzu werden ein arithmetischer Zufallszahlengenerator oder ein rekursiver arithmetischer Zufallszahlengeneratoroder, ein Kongruenzgenerator oder Fibonacci-Generator oder ein inverser Kongruenzgenerator oder ein Mersenne Twister eingesetzt.

Eine weitere vorteilhafte Ausgestaltung der Erfindung zeichnet sich dadurch aus, dass nach der Authentifikation eine gezielte Versendung der Botschaften über die im jeweiligen Fahrzeug verfügbare Funkkommunikationseinheit mit geringer Wiederholrate erfolgt und die Wiederholrate an die jeweilige Kanalauslastung angepasst ist.

Besonders vorteilhaft ist bei einer weiteren Ausgestaltung des erfindungsgemäßen Verfahrens, dass die Botschaft mindestens eine Ortsinformation, die eine GNSS-Position und eine frei durch den Fahrer frei wählbare Kennung enthält, und symmetrisch verschlüsselt wird.

Gemäß einem weiteren Ausführungsbeispiel werden die empfangenen Ortsinformationen auf einer digitalen Karte der Navigationseinheit des Fahrzeuges als die aktuellen Positionen aller Fahrzeuge des Kommunikationsverbundes festgestellt und angezeigt.

Gemäß einem weiteren besonders vorteilhaften Ausführungsbeispiel des erfindungsgemäßen Verfahrens werden auf der digitalen Karte die Positionen der anderen Fahrzeuge relativ zur Position des eigenen Fahrzeuges dargestellt.

Besonders vorteilhaft ist das erfindungsgemäße Verfahren, wenn der Informationsaustausch zwischen den Fahrern der Fahrzeuge des Kommunikationsverbundes über eine geschlossene Sprechfunkverbindung und der Informationsaustausch zwischen den Fahrern der Fahrzeuge des Kommunikationsverbundes über eine geschlossene Textnachrichtenverbindung durchgeführt werden.

In einer weiteren vorteilhaften Ausgestaltung des erfindungsgemäßen Verfahrens werden innerhalb des Kommunikationsverbundes Navigationsinformationen zwischen den Verbundkommunikationseinheiten der Fahrzeuge ausgetauscht.

Besonders vorteilhaft ist es, dass an die Verbundkommunikationseinheiten der Fahrzeuge eine Warninformation gesendet wird, falls eines der Fahrzeuge von einem Störereignis bezüglich der Einhaltung der Kolonnenformation betroffen ist.

Eine weitere besonders vorteilhafte Ausführungsform ermöglich es dem Fahrer aus einer Gruppe von Störereignissen auszuwählen. Dies umfassen beispielsweise die Ereignisse: Überschreitung eines definierten Maximalabstandes eines Fahrzeuges zu den übrigen Fahrzeugen; unfallbedingtes Stoppen eines Fahrzeuges; fahrzeugdefektbedingtes Stoppen eines Fahrzeuges; Verlassen einer geplanten Kolonnenroute durch ein Fahrzeug.

Besonders vorteilhaft bei einer weiteren Ausführungsform des erfindungsmäßen Verfahrens ist es, dass bei einem eintretenden Störereignis eine Sprachverbindung zwischen den Fahrzeugen der Kolonne aufgebaut wird.

Eine weitere vorteilhafte Ausgestaltung des erfindungsgemäßen Verfahrens zeichnet sich dadurch aus, dass die Verbundkommunikationseinheit zum Übermitteln der Botschaften als drahtlose Zugangs- und Fahrtberechtigungseinheit und/oder auf Basis von WLAN ausgeführt ist.

Der Eintritt in diesen Kreis der geschlossenen Kommunikation wird durch das erfindungsgegenständliche Initiierungsprocedere erreicht, welches kommunikationstechnisch einen so genannten Handshake zwischen den zu verbindenden Kommunikationseinheiten darstellt. Voraussetzung hierfür ist, dass die Fahrzeuge die jeweils anderen Fahrzeuge der Kolonnenformation per mobiler Kommunikation zwecks Kennungsaustausch kontaktieren können, um anschließend durch Eingabe der gleichen Kennungsinformation dem Kommunikationsverbund beizutreten. Nach diesem Handshake erkennt jede Funkkommunikationseinheit, die in einer einfachen Ausgestaltung als drahtlose Zugangs- und Fahrtberechtigungseinheit (RKE) ausgeführt sein kann, ob eine Information von einem Fahrzeug der Kolonnenformation kommt oder von einem fremden Fahrzeug. Dies bildet die technische Voraussetzung dafür, die Kolonnenformation hinsichtlich ihrer Aufgabe zu koordinieren.

Vorzugsweise umfasst die zum Austausch der Kennungsinformation verwendete Funkkommunikationseinheit eine Sprechfunkeinheit, damit ein zutrittswilliges Kraftfahrzeug die zum Zutritt zum Kommunikationsverbund erforderliche Kennungsinformation auf einfachem Wege per Sprachkommunikation erlangen kann. Die Sprechfunkeinheit kann beispielsweise ein UKW-Sprechfunkgerät sein. Es ist jedoch auch denkbar, zum Austausch der Kennungsinformation auf herkömmliche mobile Telekommunikationsnetze, wie GSM, GPRS, UMTS oder LTE zurückzugreifen. Neben einer Sprechfunkeinheit kann auch die Verbundkommunikationseinheit, welche den geschlossenen Informationsaustausch innerhalb des Kommunikationsverbunds ermöglicht, integraler Bestandteil der Funkkommunikationseinheit sein. Diese ist mit Mitteln zur Eingabe der Kennungsinformation auszustatten, um die erfindungsgemäße Initiierung der internen Kommunikation durchzuführen. Auch die Verbundkommunikationseinheit kann zur Sprachkommunikation zwischen den Fahrzeugen des Kommunikationsverbundes verwendet werden. Daneben ist es jedoch auch möglich, diese Kommunikation per Datenübertragung, beispielsweise durch Textnachrichten, zu gestalten.

Gemäß einer die Erfindung verbessernden Maßnahme wird vorgeschlagen, zum Eintreten eines neuen Fahrzeuges in einen bestehenden Kommunikationsverbund die Quittierung aller übrigen Fahrzeuge des bereits bestehenden Kommunikationsverbundes zu verlangen. Hierdurch wird sichergestellt, dass alle übrigen Fahrzeuge den Neueintritt eines neuen Fahrzeugs in den Kommunikationsverbund wahrnehmen und diesen zulassen.

Gemäß einer anderen die Erfindung verbessernden Maßnahme wird vorgeschlagen, dass die erfindungsgegenständliche Funkkommunikationseinheit mit einer Navigationseinheit des Fahrzeuges in Verbindung steht. Dies bildet die gerätetechnische Voraussetzung dafür, neben organisatorischen Informationen auch Navigationsinformationen innerhalb des geschlossenen Kommunikationsverbundes auszutauschen.

Damit die interne Kommunikation innerhalb des Kommunikationsverbundes gegen äußere Einflüsse gesichert ist, wird vorgeschlagen, hierfür gängige Verschlüsselungsalgorithmen anzuwenden. Durch die hierdurch gewährleistete Abhörsicherheit können Störungen des Kommunikationsverbundes vermieden werden.

Im Hinblick auf die Integration von Navigationseinheiten der Fahrzeuge in den geschlossenen Kommunikationsverbund wird gemäß einer weiteren die Erfindung verbessernden Maßnahme vorgeschlagen, auf einer digitalen Karte der jeweiligen Navigationseinheit des Fahrzeuges die aktuelle Position aller Fahrzeuge des Kommunikationsverbundes festzustellen und anzuzeigen. Hierdurch bekommt jeder Fahrer eine Übersicht über die aktuelle Position der übrigen Fahrzeuge des Kommunikationsverbundes. Vorteilhafterweise sollten auf der digitalen Karte daneben auch die Positionen der anderen Fahrzeuge relativ zur Position des eigenen Fahrzeuges dargestellt werden, um die Entfernungen untereinander abschätzen zu können. Dies bietet die Voraussetzung dafür, beispielsweise durch Fahrgeschwindigkeitsreduzierung des Führungsfahrzeuges einer Kolonnenformation ein unerwünschtes Auseinanderziehen der Kolonnenformation auf der Straße zu vermeiden.

Die Integration der Navigationseinheit in den Kommunikationsverbund gestattet es auch anderen Navigationsinformationen zwischen den Verbundkommunikationseinheit der Fahrzeuge auszutauschen, wie aktuelle Geschwindigkeit anderer Fahrzeuge, deren prognostizierte Ankunftszeit und dergleichen.

Gemäß einer anderen die Erfindung verbessernden Maßnahme wird vorgeschlagen, dass an die Verbundkommunikationseinheiten der Fahrzeuge dann eine Warninformation gesendet wird, falls eines der Fahrzeuge der Kolonnenformation von einem Störereignis bezüglich der Einhaltung der Kolonnenformation betroffen ist. Ein solches Störereignis kann beispielsweise sein: Überschreitung eines definierten Maximalabstandes eines Fahrzeuges zu den übrigen Fahrzeugen; unfallbedingtes Stoppen eines Fahrzeuges; ein durch einen Fahrzeugdefekt bedingtes Stoppen des betreffenden Fahrzeuges und/oder Verlassen einer geplanten Kolonnenroute durch ein Fahrzeug.

Durch die hierdurch ausgelöste Warninformation an die übrigen Fahrzeuge der Kolonnenformation kann beispielsweise durch Organisation eines Zwischenstopps unmittelbar auf ein Störereignis reagiert werden und die Kolonnenformation kann trotz eines solchen Störereignisses gewahrt bleiben. Zusätzlich zu den vorstehend erläuterten Maßnahmen wird vorgeschlagen, bei Eintritt eines Störereignisses automatisch eine Sprachverbindung zwischen den Fahrzeugen der Kolonne aufzubauen. Ist die Kolonnenformation sehr groß, so kann zuvor bestimmt werden, zu welchen Fahrzeugen der Kolonnenformation bei welchem Ereignis eine solche Sprachverbindung aufgebaut werden soll. Diese Einschränkung der Fahrzeuge kann dabei konkret an Fahrzeuge gebunden sein, beispielsweise einem vordefinierten Führungsfahrzeug oder bestimmte Überwachungsfahrzeuge der Kolonnenformation. Die besagte Sprachverbindung wird vorteilhafterweise über standardisierte Funktechnologien hergestellt, wie WLAN, WiMax, GSM, UMTS, LTE, PMR und dergleichen. Durch die automatische Sprachverbindung zwischen den Fahrzeugen der Kolonnenformation bei Eintreten eines vordefinierten Störereignisses wird sichergestellt, dass alle Mitglieder der Kolonnenformation über den Zustand der Kolonnenformation informiert bleiben.

Die Kopplung verschiedener Fahrzeuge einer Kolonne mittels Kommunikation und Datenaustausch zwischen den Fahrzeugen während der Fahrt bietet bereits bei niedrigen Ausstattungsraten einen deutlich erkennbaren Nutzen für die Besitzer von Fahrzeugen mit C2X Technologie. Bisher sind die dargestellten Lösungen jedoch für breitbandige Kommunikationstechnologien ausgelegt.

Ausgangspunkt ist eine Gruppe von Fahrzeugen, die gemeinsam fahren wollen wie z. B. ein Sportverein zu einer Sportveranstaltung oder eine Gruppe von Kollegen zu einem Kunden oder eine Gruppe von Handwerkern zu einer Baustelle oder mehrere Transporter eines Logistikunternehmens zu einem Zielort. Vor dem Start der Fahrt aktiviert jeder Fahrer in seinem Fahrzeug die "Gruppenfunktion" und gibt ein Passwort ein. Dieses Passwort ist für alle Beteiligten in der Gruppe gleich und identifiziert das Fahrzeug als Teil der Gruppe, wobei idealerweise daher ein Passwort verwendet wird, das zufällig generiert wird.

Anschließend sendet jedes Fahrzeug über seine Kommunikationstechnologie z.B. RKE mit geringer Wiederholrate, wie z. B. 0.1 - 0.2 Hz eine Botschaft aus, wobei die Wiederholrate auch an die Kanalauslastung angepasst werden wird, wobei die hohe Kanalauslastung eine niedrigere Wiederholrate nach sich zieht. Diese Botschaft ist mit einer symmetrischen Verschlüsselung, wie z. B. AES, verschlüsselt und daher nur von Teilnehmern der Gruppe mit dem richtigen Passwort entschlüsselbar.

In dieser Botschaft wird auf jeden Fall die (GNSS-)Position mitgesendet. Zusätzlich kann eine frei wählbare Kennung versendet werden (z. B. "Boss", "Linksaußen", "Hasi", "Detlef", ...), durch die eine Zuordnung zu einer Person innerhalb der Gruppe möglich wird.

Die Position kann daraufhin in einer digitalen Karte angezeigt werden und für jede Kennung eine andere Farbe verwendet werden.

Zusätzlich kann aktiviert werden, dass in die Botschaft eine Kennung integriert wird, wenn ein Fahrzeug der Gruppe ein Manöver durchführt (z. B. links abbiegen), damit alle anderen Fahrzeuge über dieses Manöver informiert werden (idealerweise sendet nur das vorne fahrende Fahrzeug diese Information). Es kann auch dann eine Kennung in die Botschaft integriert werden, wenn ein Fahrzeug von der geplanten Route abweicht. Hierzu muss jedes Fahrzeug der Gruppe über ein Navigationssystem verfügen und dort die Route geplant haben.

Alternativ können auch die Navigationssysteme der folgenden Fahrzeuge sich automatisch so umstellen, dass sie dem "Falschfahrer" folgen oder ihn wieder einfangen.

Zusätzlich ist es hilfreich, wenn jeder Teilnehmer der Gruppe vordefinierte Meldungen in seine Botschaft integrieren kann (z. B. "komme gleich", "stehe im Stau", "bin auf Parkplatz", "dein Licht geht nicht", "Vorsicht, Blitzer!", ...). Diese Meldung kann z. B. über einen Touchscreen ausgewählt werden oder über andere HMI-Methoden. Als Erweiterung kann auch eine Funktion ähnlich SMS integriert werden, was jedoch zu einer größeren Ablenkung führt.

Mit dem dargestellten Verfahren kann bereits bei niedrigen Datenraten mittels z. B. RKE der Vorteil der Kolonnenbildung benutzt werden. Vor allem die vordefinierten Botschaften schaffen eine optimierte Auslastung der vorhandenen Datenrate.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zur Kommunikation zwischen einem ersten Kraftfahrzeug und mindestens einem zweiten Kraftfahrzeug, die einem mobilen, zumindest zwei Kraftfahrzeuge umfassenden Kommunikationsverbund angehören, wobei zur Initiierung der internen Kommunikation der sich in Kolonnenformation befindlichen Fahrzeuge in einem ersten Schritt durch die je zugeordneten Fahrer über eine Funkkommunikationseinheit zwischen den Fahrzeugen via Funkverbindung nur eine Kennungsinformation zur Bildung des Kommunikationsverbundes ausgetauscht wird, welche in einem zweiten Schritt in eine Verbundkommunikationseinheit jedes Fahrzeuges eingegeben wird, um nach Quittierung durch eine Verbundkommunikationseinheit mindestens eines der anderen dem Kommunikationsverbund angehörigen Fahrzeuges in denselben einzutreten, **dadurch gekennzeichnet, dass** die Kennungsinformation eine Authentifikation ist und die Authentifikation für das jeweilige Fahrerzeug durch einen nach dem Zufallsprinzip generiertem Password erfolgt.

2. Verfahren nach Anspruch 1, **dadurch gekennzeichnet, dass** nach der Authentifikation eine gezielte Versendung der Botschaften über die im jeweiligen Fahrzeug verfügbare Funkkommunikationseinheit mit geringer Wiederholrate erfolgt und die Wiederholrate an die jeweilige Kanalauslastung angepasst ist.

3. Verfahren nach Anspruch 1 oder 2, **dadurch gekennzeichnet, dass** die Botschaft mindestens eine Ortsinformation, die eine GNSS-Position und eine durch den Fahrer frei wählbare Kennung enthält, und symmetrisch verschlüsselt wird.

4. Verfahren nach einem der vorangegangen Ansprüche, d a - **durch gekennzeichnet**, dass die empfangenen Ortsinformationen auf einer digitalen Karte der Navigationseinheit des Fahrzeuges die aktuellen Positionen aller Fahrzeuge des Kommunikationsverbundes festgestellt und angezeigt werden.

5. Verfahren nach einem der vorangegangen Ansprüche, **dadurch gekennzeichnet, dass** auf der digitalen Karte die Positionen der anderen Fahrzeuge relativ zur Position des eigenen Fahrzeuges dargestellt werden.

6. Verfahren nach einem der vorangegangen Ansprüche, **dadurch gekennzeichnet, dass** der Informationsaustausch zwischen den Fahrern der Fahrzeuge des Kommunikationsverbundes über eine geschlossene Sprechfunkverbindung durchgeführt wird.

7. Verfahren nach einem der vorangegangen Ansprüche, **dadurch gekennzeichnet, dass** der Informationsaustausch zwischen den Fahrern der Fahrzeuge des Kommunikationsverbundes über eine geschlossene Textnachrichtenverbindung durchgeführt wird.

8. Verfahren nach einem der vorangegangen Ansprüche, **dadurch gekennzeichnet, dass** innerhalb des Kommunikationsverbundes Navigationsinformationen zwischen den Verbundkommunikationseinheiten der Fahrzeuge ausgetauscht werden.

9. Verfahren nach einem der vorangegangen Ansprüche, **dadurch gekennzeichnet, dass** an die Verbundkommunikationseinheiten der Fahrzeuge eine Warninformation gesendet wird, falls eines der Fahrzeuge von einem Störereignis bezüglich der Einhaltung der Kolonnenformation betroffen ist.

10. Verfahren nach einem der vorangegangen Ansprüche, **dadurch gekennzeichnet, dass** das Störereignis ausgewählt ist aus einer Gruppe, umfassend die Ereignisse: Überschreitung eines definierten Maximalabstandes eines Fahrzeuges zu den übrigen Fahrzeugen; unfallbedingtes Stoppen eines Fahrzeuges; fahrzeugdefektbedingtes Stoppen eines Fahrzeuges; Verlassen einer geplanten Kolonnenroute durch ein Fahrzeug.

11. Verfahren nach einem der vorangegangen Ansprüche, **dadurch gekennzeichnet, dass** bei einem eintretenden Störereignis eine Sprachverbindung zwischen den Fahrzeugen der Kolonne aufgebaut wird.

12. Verfahren nach einem der vorangegangen Ansprüche, **dadurch gekennzeichnet, dass** die Verbundkommunikationseinheit zum übermitteln der Botschaften als drahtlose Zugangs- und Fahrtberechtigungseinheit und/oder auf Basis von WLAN ausgeführt ist.

## Claims

1. Method for communicating between a first motor vehicle and at least one second motor vehicle which belong to a mobile communication network comprising at least two motor vehicles, wherein in a first step only one identity information item is exchanged between the vehicles by each driver for forming a communication network by means of a radio communication unit via radio connection in order to initiate the internal communication of the vehicles present in a column formation, this information item being entered in a second step into a network communication unit of each vehicle in order to join the communication network after acknowledgement by a network communication unit of at least one of the other vehicles belonging to the communication network, **characterized in that** the identity information item is an authentication, and the authentication for the respective vehicle takes place by means of a password generated in accordance with the random-number principle.

2. Method according to Claim 1, **characterized in that**, after the authentication, a selective dispatching of the messages takes place with a low repetition rate via the communication unit available in the respective vehicle and the repetition rate is matched to the respective channel usage.

3. Method according to Claim 1 or 2, **characterized in that** the message contains at least one location information item, the one GNSS position and one identity freely selectable by the driver, and is encrypted symmetrically.

4. Method according to one of the preceding claims, **characterized in that** the location information items received are found and displayed on a digital map of the navigation unit of the vehicle as the current positions of all vehicles of the communication network.

5. Method according to one of the preceding claims, **characterized in that** the positions of the other vehicles relative to the position of one's own vehicle are displayed on the digital map.

6. Method according to one of the preceding claims, **characterized in that** the information exchange between the drivers of the vehicles of the communication network is carried out via a closed radio telephony link.

7. Method according to one of the preceding claims, **characterized in that** the information exchange between the drivers of the vehicles of the communication network is carried out via a closed text message link.

8. Method according to one of the preceding claims, **characterized in that** navigation information items are exchanged between the network communication units of the vehicles within the communication network.

9. Method according to one of the preceding claims, **characterized in that** a warning information item is sent to the network communication units of the vehicles if one of the vehicles is affected by a disturbing event with respect to the maintenance of the column formation.

10. Method according to one of the preceding claims, **characterized in that** the disturbing event is selected from a group comprising the events: exceeding a defined maximum distance of a vehicle from the other vehicles; accident-related stopping of a vehicle; vehicle defect-related stopping of a vehicle; leaving of a planned column route by a vehicle.

11. Method according to one of the preceding claims, **characterized in that**, in the case of a disturbing event occurring, a voice link is set up between the vehicles of the column.

12. Method according to one of the preceding claims, **characterized in that** the network communication unit is constructed for transmitting the messages as wireless access and trip authorization unit and/or on the basis of WLAN.

## Revendications

1. Procédé de communication entre un premier véhicule automobile et au moins un deuxième véhicule automobile, qui appartiennent à un réseau de communication mobile comprenant au moins deux véhicules automobiles, dans lequel, pour faire débuter la communication interne des véhicules se trouvant dans une formation en colonne, on échange, dans un premier stade par les conducteurs associés respectivement, par l'intermédiaire d'une unité de radiocommunication entre les véhicules par liaison radio, seulement une information de caractérisation pour la formation du réseau de communication, information qui, dans un deuxième stade, est entrée dans une unité de communication de réseau de chaque véhicule pour, après accusé de réception par une unité de communication de réseau d'au moins l'un des autres véhicules appartenant au réseau de communication, entrer dans celui-ci, **caractérisé en ce que** l'information de caractérisation est une authentification et l'authentification pour le véhicule respectif s'effectue par un mot de passe créé suivant le principe aléatoire.

2. Procédé suivant la revendication 1, **caractérisé en ce que**, après l'authentification, un envoi ciblé des messages, par l'intermédiaire de l'unité de radiocommunication disponible dans le véhicule respectif, s'effectue à un taux de répétition petit et le taux de répétition est adapté à la charge respective du canal.

3. Procédé suivant la revendication 1 ou 2, **caractérisé en ce que** le message a au moins une information de localisation, qui contient une position GNSS et une caractérisation pouvant être choisie librement par le conducteur, et qui est chiffrée symétriquement.

4. Procédé suivant l'une des revendications précédentes, **caractérisé en ce que** les informations de localisation reçues sont constatées sur une carte numérique de l'unité de navigation du véhicule pour les positions présentes de tous les véhicules du réseau de communication et sont affichées.

5. Procédé suivant l'une des revendications précédentes, **caractérisé en ce que** l'on représente, sur la carte numérique, les positions des autres véhicules par rapport à la position du propre véhicule.

6. Procédé suivant l'une des revendications précédentes, **caractérisé en ce que** l'on effectue l'échange d'informations entre les conducteurs des véhicules du réseau de communication par une liaison radio vocale fermée.

7. Procédé suivant l'une des revendications précédentes, **caractérisé en ce que** l'on effectue l'échange d'informations entre les conducteurs des véhicules du réseau de communication par une liaison par message de texte fermé.

8. Procédé suivant l'une des revendications précédentes, **caractérisé en ce que** dans le réseau de communication, des informations de navigation sont échangées entre les unités de communication de réseau des véhicules.

9. Procédé suivant l'une des revendications précédentes, **caractérisé en ce qu'**on envoie aux unités de communication de réseau des véhicules, une information d'alerte, si l'un des véhicules est concerné par un événement perturbateur se rapportant au maintien de la formation en colonne.

10. Procédé suivant l'une des revendications précédentes, **caractérisé en ce que** l'événement perturbateur est choisi dans un groupe comprenant les éléments : dépassement d'une distance maximum définie d'un véhicule aux autres véhicules ; arrêt dû à un accident d'un véhicule ; arrêt dû à une panne d'un véhicule ; un véhicule quitte un itinéraire de colonne prévu.

11. Procédé suivant l'une des revendications précédentes, **caractérisé en ce que**, s'il se produit un évènement perturbateur, il est établi une liaison vocale entre les véhicules de la colonne.

12. Procédé suivant l'une des revendications précédentes, **caractérisé en ce que** l'unité de communication de réseau est conçue pour transmettre les messages sous la forme d'une unité sans fil d'autorisation d'accès et de marche et/ou sur la base de WLAN.
